# EUROPÄISCHE PATENTSCHRIFT

(11) **EP 0 816 225 B1**
(45) Veröffentlichungstag und Bekanntmachung des Hinweises auf die Patenterteilung: **11.09.2002**
(21) Anmeldenummer: 97110363.5
(22) Anmeldetag: 25.06.1997
(51) Int. Cl.: B64D 13/00, B01D 53/04, B01D 53/26

(54) **Verfahren zur Entfernung von gasförmigen Komponenten aus der Kabinenluft eines Flugzeugs**
Process for the removal of gaseous components from the air of an aircraft cabin
Procédé d'élimination de composants gazeux d'air d'une cabine d'un avion

(30) Priorität: 28.06.1996 DE 19625820
(43) Veröffentlichungstag der Anmeldung: 07.01.1998
(73) Patentinhaber: Astrium GmbH, 81663 München (DE)
(72) Erfinder: Preiss, Helmut, Dipl.-Ing., 88697 Bermatingen (DE); Knorr, Wolfram, Dipl.-Ing., 88709 Hagnau (DE); Pressmar, Axel, Dipl.-Ing., 88090 Immenstaad (DE)
(74) Vertreter: Meel, Thomas

(56) Entgegenhaltungen:
- DE-A- 4 318 169
- DE-C- 4 335 152

## Beschreibung

Die Erfindung betrifft ein Verfahren zur Entfernung von mindestens einer gasförmigen Komponente aus der Kabinenluft eines Flugzeugs.

Bisher wird in Flugzeugen die Schadstoffkontrolle, insbesondere die CO₂und Feuchtekontrolle, durch genügend Luftwechsel in der Kabine bewerkstelligt. Die Frischluft für die Klimatisierung wird am Triebwerk an einer Verdichterstufe abgezapft, wodurch sich eine erhebliche Verlustleistung am Triebwerk ergibt. Gleichzeitig wird Kabinenluft in einem Kreislauf umgewälzt (Recycleluft) und dabei konditioniert (insbesondere gekühlt).

Eine gewisse Energieeinsparung bzw. Reduktion der Verlustleistung im Triebwerk soll durch die Reduzierung des Frischluftanteils und Erhöhung des Recycleluftanteils der Klimaanlage in Luftfahrzeugen zukünftiger Generation erzielt werden Aus diesem Grund wird die aktive Kontrolle der Kabinenluft hinsichtlich Luftschadstoffen und Luftfeuchtigkeit notwendig (insbesondere CO₂- und Feuchtekontrolle).

Aus der Raumfahrt sind mehrere regenerative Methoden zur aktiven CO₂ - Kontrolle in vollkommen geschlossenen Klimasystemen als Teil der Lebenserhaltungssysteme bekannt.
Neben Molekularsieben werden auch Festamine zur physikalischen Anlagerung (Adsorption) von CO₂ verwendet. Das beladene Adsorbens wird anschließend desorbiert (regeneriert).
Allgemein angewandt werden Desorptionstechniken nach der Druckwechsel- bzw. Temperaturwechselmethode.
Aus der Raumfahrt bekannt ist z.B. die Regeneration von Festamin unter Verwendung von Wasserdampf. Hieraus ergibt sich jedoch eine Feuchtezufuhr in die zu reinigende Luft. Eine andere Methode ist die Verwendung von Vakuum, da in der Raumfahrt kostenlos zur Verfügung, unterstützt durch Wärmezufuhr. Vakuum wird allerdings nur für die hier üblichen kleinen Schadstoffbindeanlagen (Auslegungsbeispiel: 3-7 Personen) verwendet, bei denen die Druckdichtigkeit technisch machbar ist.

In der **DE 43 18 169 A1** ist ein Verfahren und eine Vorrichtung zur Entfernung von Komponenten aus Fluid-Gemischen in einem Flugzeug bekannt, bei dem die Regeneration eines Adsorberbetts mit Außenluft durchgeführt wird. Dabei erfolgt z.B. die Trocknung des Adsorbens mit Außenluft durch Senkung des Wasserdampf-Partialdruckes und Absenken des Anlagendruckes auf Außendruckniveau.
Die Regenerationsfähigkeit einzelner Adsorbenzien, z.B. Festamin ist jedoch bei Absenkung des Druckes auf Außendruckniveau eines Flugzeugs (kein Vakuum) sehr eingeschränkt.
Insbesondere bei Großraumflugzeugen (mehr als 300 Passagiere) erreicht die bekannte Vorrichtung eine Größenanordnung, bei der die Verwendung von Außenluft auf Außendruckniveau (Unterdruck in der Anlage gegenüber der Kabine) ein Problem hinsichtlich der Druckdichtigkeit darstellt. Die Gefahr eines Lecks bzw. Druckverlusts in der Kabine ist nicht mehr tolerierbar.

Es ist deshalb Aufgabe der Erfindung, ein Verfahren zur Entfernung von gasförmigen Komponenten aus der Kabinenluft von Flugzeugen zu schaffen, mit dem die Gefahr eines Lecks bzw. eines Druckabfalls in der Kabine vermieden wird.

Diese Aufgabe wird mit dem Verfahren nach Anspruch 1 gelöst. Vorteilhafte Ausführungen der Erfindung sind Gegenstand von Unteransprüchen.

Gemäß der Erfindung erfolgt die Regeneration des Adsorbens mit einem Regenerationsstrom aus erwärmter Kabinenluft auf Kabinendruckniveau, wobei der Regenerationsstrom in einem Umluftkreis geführt wird.

Durch das erfindungsgemäße Verfahren wird eine Regeneration mit hoher Energiedichte erreicht (hoher Regenerationsstrom), so daß die Vorrichtung zur Durchführung des Verfahrens klein gehalten werden kann.

Durch den Umluftbetrieb wird eine Aufkonzentration der aus der Kabinenluft entfernten Komponenten (im folgenden auch als Schadgase bezeichnet) erzielt (z.B. Faktor 100 bezogen auf die Konzentration der Schadgase in der zu reinigenden Luft). Die desorbierten Schadgase, z.B. CO₂ und/oder Wasserdampf werden zusammen mit der Abluft über Bord abgelassen (Spülung des Umluftkreislaufes). Der über Bord gelassene Abluftstrom wird durch Kabinenluft ersetzt. Aufgrund der besagten Aufkonzentration der Schadgase ergibt sich nur ein geringer durchschnittlicher Abluftstrom (z.B. 1/100 bezogen auf den zu reinigenden Luftstrom) zur Spülung des Desorptionsumluftkreises. Insgesamt wird somit bei der Regeneration Kabinenluft nur in sehr geringem Maße als Abluft über Bord gelassen. Entsprechend kann auch die Außenluftzufuhr gering gehalten werden.

Die Spülung des Umluftkreises kann entweder diskontinuierlich (kurzzeitig mit einem relativ hohen momentanen Luftstrom) oder kontinuierlich (über längere Zeit mit einem kleinen Luftstrom) oder einer Kombination aus beiden Möglichkeiten erfolgen.

Durch geeignete Auswahl von Ventilen und Drosseln kann die Spülung des Umluftkreises an die Umgebung des Flugzeugs sowohl am Boden als auch in Reiseflughöhe erreicht werden.

In einer bevorzugten Ausführungsform wird CO₂ und/oder Wasserdampf (Feuchtigkeit) aus der Kabinenluft entfernt. Durch die Wahl des entsprechenden Adsorbens können aber auch andere Komponenten entfernt werden, z.B. Kohlenwasserstoffe, darunter Methan oder CO. Allgemein können mit dem erfindungsgemäßen Verfahren durch Einsatz entsprechender, dem Fachmann geläufiger Adsorbenzien, solche Komponenten aus der Kabinenatmosphäre entfernt werden, deren Entfernung im Hinblick auf die Erreichung bestimmter Grenzwerte für die Gesundheit der Passagiere notwendig ist.

In einer vorteilhaften Ausführung wird als Adsorbens ein Festamin gewählt. Damit können an demselben Adsorbens CO₂ und Wasserdampf in ausreichendem Maße und mit einer geeigneten Anlagengröße gebunden werden.

Die Erfindung wird anhand von Fig. näher erläutert. Es zeigen:
- Fig. 1,2: jeweils Vorrichtungen zur Durchführung des erfindungsgemäßen Verfahrens,
- Fig. 3: eine Adsorptions/Desorptionseinheit (Explosionsdarstellung),
- Fig. 4: eine weitere Adsorptions/Desorptionseinheit.

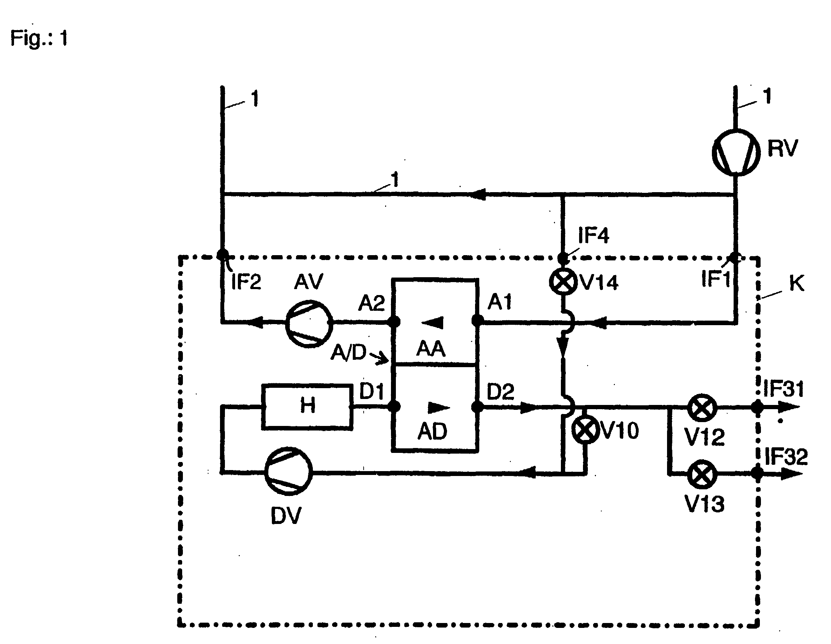

Fig. 1 zeigt in schematischer Darstellung eine erste Ausführung einer Vorrichtung **K**, in dem das erfindungsgemäße Verfahren durchgeführt wird. Dargestellt sind nur die für das Verständnis der Erfindung wesentlichen Merkmale. Das Verfahren wird hier in Kombination mit einem Kabinenumluftverfahren angewandt, d.h. die Luft aus der Passagierkabine wird in einem Kreislauf (Recycleluft) vorkonditioniert und mit Hilfe eines Ventilators **RV** über die Leitungen **1** umgewälzt. Ein Teil der Kabinenluft aus diesem Kreislauf wird zur Entfernung mindestens einer Komponente abgezweigt und über den Punkt **IF1** in die Vorrichtung **K** geführt (Betrieb im Bypass). Selbstverständlich kann die Kabinenluft anstatt aus dem Kabinenumluftkreis auch direkt aus der Kabine entnommen werden. Die abgezweigte Kabinenluft wird an eine Adsorptions/Desorptionseinheit **A/D** geführt. Diese umfaßt zwei Anschlüsse **A1,A2.** Der Einlaß **A1** dient zur Zuführung der zu reinigenden Kabinenluft an ein Adsorbens, an dem die zu entfernende Komponente adsorbiert wird. Nach der Adsorption verläßt die gereinigte Kabinenluft die Adsorptions/Desorptionseinheit **A/D** über den Auslaß **A2** und wird über Punkt **IF2** in den Kabinenumluftkreislauf zurückgeführt. Um den Ventilator **RV** in dem Kabinenumluftkreis zu entlasten, ist für die Förderung des Adsorptionsstroms über die internen Anlagenströmungswiderstände ein zusätzlicher Ventilator **AV** vorhanden. Durch entsprechende Dimensionierung des Ventilators **RV** und geeignetes Drosseln des Hauptstroms der Recycleluft könnte der Ventilator **AV** auch weggelassen werden. Der Zustand, bei dem in der Adsorptions/Desorptionseinheit **A/D** die Schadgase adsorbiert werden, ist in der Fig. mit **AA** symbolisiert. Wenn nach einer gewissen Zeit die Aufnahmefähigkeit des Adsorbens für die zu entfernende Komponente erschöpft ist, erfolgt die Desorption (Austreiben des zuvor adsorbierten Schadgases). Dieser Zustand der Adsorptions/Desorptionseinheit **A/D** ist in der Fig. 1 mit **AD** bezeichnet. Dazu wird das beladene Adsorbens innerhalb der Adsorptions/Desorptionseinheit **A/D** mit dem Regenerationsstrom in Kontakt gebracht. Der Regenerationsstrom ist von dem zu reinigenden Kabinenluftstrom getrennt. Der Regenerationsstrom besteht aus Kabinenluft, die von der Heizvorrichtung **H** erwärmt wird. Der Regenerationsstrom wird von einem Ventilator **D V** in einem Kreislauf umgewälzt. Der erwärmte Regenerationsstrom tritt über den Einlaß **D1** in die Adsorptions/Desorptionseinheit **A/D** ein, erwärmt dadurch das Adsorbens und treibt die Schadgase aus. Die desorbierten Schadgase verlassen zusammen mit dem Regenerationsstrom die Adsorptions/Desorptionseinheit **A/D** über den Auslaß **D2** und werden an den Ventilator **DV** zurückgeführt. Durch die Umwälzung des Regenerationsstroms erfolgt eine Aufkonzentration der Schadgase im Umluftkreislauf. Durch Spülen des Umlauftkreislaufes werden die aufkonzentrierten Schadgase zusammen mit dem Regenerationsstrom mittels einer geeigneten Ventilkombination, hier Ventile **V12**, **V13** über Bord gelassen. Die Abluft (der über Bord gelassene Kabinenluftanteil des Umluftkreislaufs) wird durch Kabinenluft ersetzt, die an der Schnittstelle **IF4** über das Ventil **V14** dem Umluftkreis des Regenerationsstroms zugeführt wird.

Das Ablassen der Schadgase und der Abluft kann entweder diskontinuierlich durch einen kurzzeitig größeren Luftstrom (Ventil **V12** oder **V13** werden kurzzeitig weit geöffnet) oder kontinuierlich durch einen kleineren Luftstrom über einen längeren Zeitraum (Ventil **V12** oder **V13** sind ständig, jedoch nur leicht geöffnet) oder in Kombination der beiden genannten Möglichkeiten erfolgen.

In der gezeigten Ausführung sind zwei Ventile **V12, V13** unterschiedlicher Größe vorhanden. Diese unterschiedlichen Ventile sind im Hinblick auf die Durchführung des erfindungsgemäßen Verfahrens am Boden einerseits und in der Luft, insbesondere auf Reiseflughöhe des Flugzeugs, andererseits gewählt. Auf Reiseflughöhe kann ein kleineres Ventil verwendet werden, da zwischen der erfindungsgemäßen Vorrichtung, die auf Kabinendruck arbeitet, und der Flugzeugumgebung ein Druckunterschied von ca. 500 hPa besteht. Da am Boden praktisch kein Druckgefälle zwischen Flugzeuginnern und Umgebung besteht, kann bei Bodenbetrieb gegebenenfalls das Ventil **V10** mehr oder weniger geschlossen werden, um den Umluftkreis des Regenerationsstroms zu drosseln und dadurch die Abluft nach draußen zu befördern.

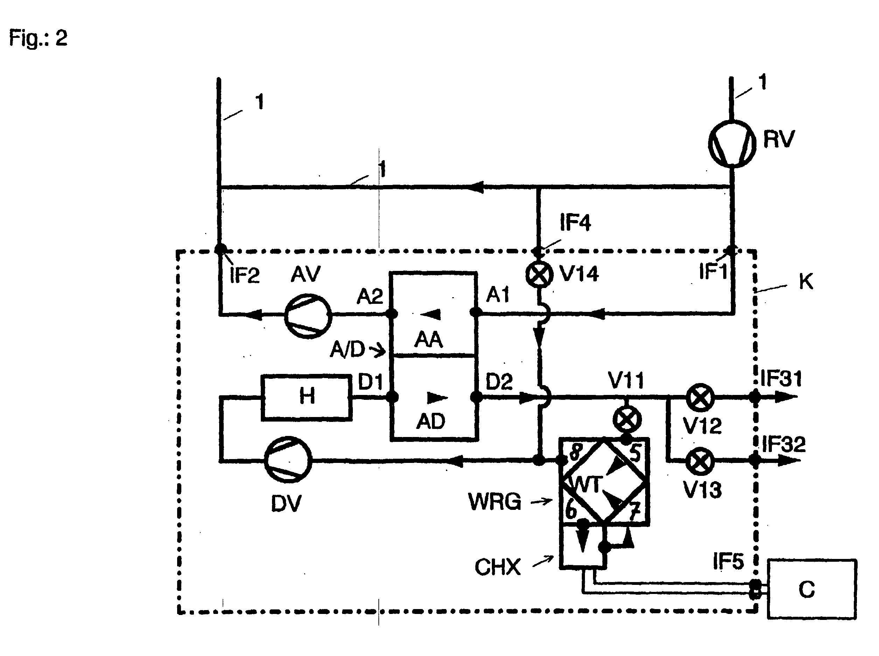

Eine weitere Ausbildung der Erfindung zeigt Fig. 2. Eine der zu entfernenden Komponenten ist hier Wasserdampf, der wie bei der Ausführung nach Fig. 1 an dem Adsorbens in der Adsorptions/Desorptionseinheit **A/D** gebunden wird. Gegenüber der Ausführung nach Fig. 1 wird der Wasserdampf jedoch hier zusätzlich auskondensiert, um die Entfeuchtungsleistung zu erhöhen. Dazu ist in den Umluftkreis des Regenerationsstroms ein kondensierender Wärmetauscher **CHX** geschaltet, der die Wärme über eine Wärmesenke **C** abgibt. Der kondensierende Wärmetauscher **CHX** ist hier außerdem mit einem Wärmerückgewinnungssystem **WRG** kombiniert, um den Energiebedarf für die Heizvorrichtung **H** und die Kühlleistung des kondensierenden Wärmetauschers **CHX** bzw. der Wärmesenke **C** zu reduzieren. Die Funktion des Ventils **V11** in Fig. 2 entspricht der Funktion des Ventils **V10** in Fig. 1. Das Wärmerückgewinnungssystem **WRG** selbst ist nur schematisch dargestellt. Es umfaßt vier Luftanschlüsse **5,6,7,8** sowie den Wärmetauscher **WT,** hier z.B. einen Kreuzstrom-Plattenwärmetauscher Luft/Luft. Die Bezugsziffern **5,6** bezeichnen den Einlaß bzw. den Auslaß für die zu kühlende Luft, **7,8** bezeichnen den Einlaß bzw. den Auslaß für die wieder aufzuwärmende Luft. Ist das Ventil **V11** geöffnet, so fließt der Regenerationsstrom von dem Auslaß **D2** der Adsorptions/Desorptionseinheit **A/D** zum Einlaß **5** des Wärmerückgewinnungssystems **WRG,** wo typischerweise noch eine mittlere Temperatur von ca. 70°C herrscht und in den Wärmetauscher **WT.** Dort wird er gekühlt und verläßt das Wärmerückgewinnungssystem über den Auslaß **6.** Ein Teil der Luftfeuchtigkeit kann schon hier auskondensieren. Danach durchströmt der Regenerationsstrom den kondensierenden Wärmetauscher **CHX,** wo er weiter abgekühlt wird (ca. 5°C), so daß der Wasserdampf auskondensieren kann. Der abgekühlte und entfeuchtete Regenerationsstrom wird anschließend zu dem Einlaß 7 des Wärmerückgewinnungssystem **WRG** geführt. Er durchströmt den Wärmetauscher **WT,** wobei der Wärme aufnimmt und gelangt zu dem Auslaß **8.** Durch die Wärmeübertragung wird einerseits der nach dem Auskondensieren der Feuchtigkeit kalte Regenerationsstrom wieder erwärmt um Heizenergie an der Heizvorrichtung **H** zu sparen, andererseits wird der von der Adsorption/Desorptionseinheit **A/D** kommende warme Regenerationsstrom vorgekühlt, um die Kälteleistung des kondensierenden Wärmetauschers **CHX** bzw. der Wärmesenke **C** zu reduzieren. Von dem Auslaß **8** wird der vorgewärmte Regenerationsstrom durch den Ventilator **DV** zur Heizeinrichtung **H** gefördert, wo er auf Solltemperatur für die Desorption in der Adsorptions/Desorptionseinheit **A/D** erwärmt wird.

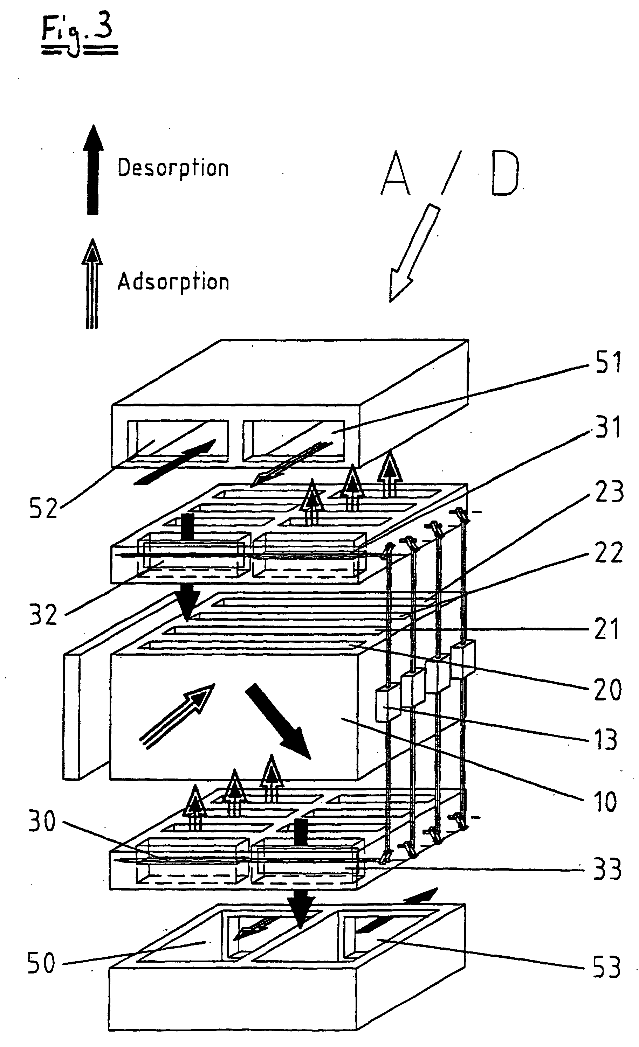

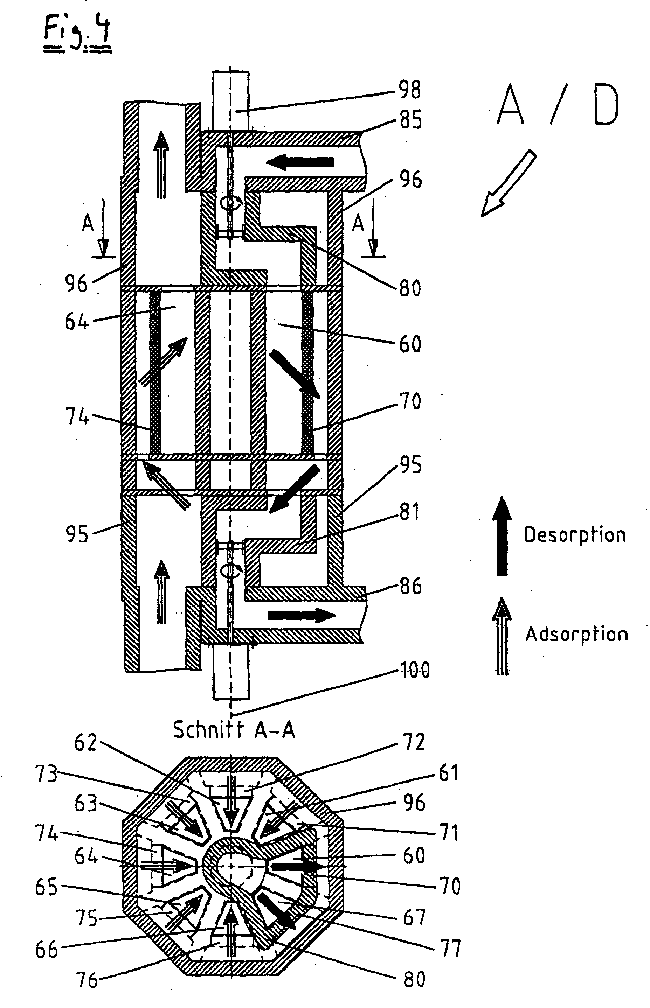

Die Fig. 3 und 4 zeigen zwei bevorzugt zu verwendende Adsorptions/Desorptionseinheiten **A/D.** Die zu reinigende Kabinenluft ist mit durchbrochenen Pfeilen, der Regenerationsstrom ist mit ausgefüllten schwarzen Pfeilen symbolisiert. Es handelt sich bei den gezeigten Ausführungen jeweils um Mehrbettsysteme. Das Adsorbens liegt dabei in mehreren getrennten Einheiten (mehrere Kartuschen oder Adsorberbetten) vor. Dabei ist mindestens 1 Adsorberbett im Adsorptionszustand und gleichzeitig mindestens ein Adsorberbett im Desorptionszustand. Man erhält somit einen quasikontinuierlichen Betrieb.

In Fig. 3 bezeichnet Bezugsziffer **10** eine Reaktionskammer, die mehrere, in einer Reihe angeordnete Kammern **20, 21,22,23** enthält. In diesen befindet sich das Adsorbens, hier in Form von Kartuschen (in der Fig. 3 nicht dargestellt). Jeder einzelnen Kammer sind vier Ventile zur Steuerung des Flusses von Kabinenluft und Regenerationsstrom durch die Kammer zugeordnet. Für die vorderste Kammer sind diese mit **30,31,32,33** bezeichnet. Die Ventile **30,31** befinden sich am Einlaß bzw. am Auslaß der Kabinenluft. Die Ventile **32,33** befinden sich am Einlaß bzw. Auslaß des Regenerationsstroms. Die Ventile sind in dieser Ausführung als Klappen ausgebildet, die über die Einheiten **13** angetrieben werden.

Oberhalb der Kammern verläuft der Kanal **51** für die Ableitung der gereinigten Kabinenluft sowie der Kanal **5 2** für die Zuführung des Regenerationsstroms. Unterhalb der Kammern verläuft der Kanal **50** für die Zuführung der zu reinigenden Kabinenluft sowie der Kanal **53** für die Ableitung des Regenerationsstroms.

Das Adsorbens in der vordersten Kammer **20** befindet sich im Zustand der Desorption. Die beiden Ventile **32, 33** an Einlaß und Auslaß des Regenerationsstrom sind gleichzeitig geöffnet. Die beiden Ventile **30,31** an Einlaß und Auslaß der Kabinenluft sind gleichzeitig geschlossen. Um auf die Adsorption umzuschalten, müssen die Ventile **32,33** geöffnet und die Ventile **30,31** geschlossen werden. In der in Fig. 3 dargestellten momentanen Situation befinden sich die Kartuschen in den Kammern **21,22,23** im Zustand der Adsorption.

Die gezeigte Vorrichtung erfüllt die folgenden Anforderungen, welche für den hier relevanten Anwendungsfall in Flugzeugen wesentlich sind:
- hohe Zuverlässigkeit/Sicherheit
- leichte Austauschbarkeit/Wartbarkeit der Teile mit geringerer Lebensdauer
- leichte Austauschbarkeit des Adsorbens, der in der Regel in Form von Kartuschen oder Adsorberbetten (Festbett oder Schüttgut) vorliegt
- Leichtigkeit und steife Konstruktion (bevorzugt werden PU-Schaumplatten mit GfK-Deckschicht und Epoxyharzkleber verwendet)
- Minimierung der Wärmekapazität in den Kammern
- Diffusionsdichtigkeit der Kammern gegen Wasserdampf
- Minimierung des Wärmedurchgangs von einer Kammer zur anderen (warm/kalt)

Fig. 4 zeigt eine weitere Ausführung der Adsorptions/Desorptionseinheit **A/D** in zwei Schnittdarstellungen. Die einzelnen Kammern **60** bis **67** sind hier rotationssymmetrisch in der Art von Kreissektoren um eine zentrale Achse **100** angeordnet. In den Kammern befindet sich jeweils eine Kartusche **70 bis 77** mit Adsorbens.
Zur Desorption werden eine oder gleichzeitig mehrere der (ortsfesten) Kammern mit einer um die zentrale Achse **100** beweglichen Anschlußleitung **80** (im folgenden auch als Dreharm bezeichnet) verbunden, so daß der Regenerationsstrom über die (ortsfeste) Leitung **85** und die bewegliche Anschlußleitung **80** in die Kammern strömen kann. Auf der gegenüberliegenden Seite der Kammern ist eine zweite, synchron zur ersten Anschlußleitung **80** bewegbare Anschlußleitung **81** vorhanden, über die der Regenerationsstrom nach Durchströmen der bzw. den jeweiligen Kammern zu der ortsfesten Leitung **86** abgeleitet wird.
Zur Drehung des Dreharms **80** dient der Antrieb **98.**
Die zu reinigenden Kabinenluft befindet sich innerhalb der Wandung **9 5** und die gereinigte Kabinenluft nach Verlassen der Kammern innerhalb der Wandung **96**.
Wie man aus der Schnittzeichnung entlang A - A erkennen kann, ist der Dreharm **80** in der gezeigten beispielhaften Ausführung derart ausgebildet, daß er immer mit zwei Kammern (in der dargestellten momentanen Situation mit den Kammem **60,67**) verbunden ist, so daß das Adsorbens innerhalb dieser beiden Kammern gleichzeitig desorbiert wird. Alle übrigen Kammern **61** bis **66,** die momentan nicht mit dem Dreharm **80** verbunden sind, befinden sich in der Strömung der Kabinenluft, so daß in den Kartuschen dieser Kammern **61** bis **66** die Adsorption stattfindet.
Das Umschalten zwischen Adsorption und Desorption geschieht dadurch, daß die Dreharme **80,81** um eine oder mehrere Kammern weitergedreht werden.

## Patentansprüche

1. Verfahren zur Entfernung von mindestens einer spezifizierten gasförmigen Komponente aus der Kabinenluft eines Flugzeugs, mit folgenden Verfahrensschritten:
- Zuführen der zu reinigenden Kabinenluft zu einem regenerierbaren Adsorbens und Adsorbieren der wenigstens einen spezifizierten gasförmigen Komponente;
- Zurückführen der gereinigten Kabinenluft in die Kabine nach dem Adsorbieren;
- Regeneration des Adsorbens mittels eines Regenerationsstroms;
**dadurch gekennzeichnet, daß** als Regenerationsstrom erwärmte Kabinenluft auf Kabinendruckniveau eingesetzt wird, die in einem Umluftkreis geführt wird, wobei in dem Umluftkreis eine Aufkonzentration der mindestens einen spezifizierten gasförmigen Komponente erfolgt und die aufkonzentrierte mindestens eine spezifizierte gasförmige Komponente und die Abluft aus dem Umluftkreis über Bord abgelassen werden, wobei die über Bord gelassene Abluft durch Kabinenluft ersetzt wird.

2. Verfahren nach Anspruch 1, **dadurch gekennzeichnet, daß** die aus der Kabinenluft zu entfernende Komponente CO₂ oder Wasserdampf ist.

3. Verfahren nach Anspruch 2, **dadurch gekennzeichnet, daß** an dem Adsorbens gleichzeitig CO₂ und Wasserdampf adsorbiert werden.

4. Verfahren nach einem der vorangehenden Ansprüche, **dadurch gekennzeichnet, daß** als Absorbens ein Festamin verwendet wird.

5. Verfahren nach einem der vorangehenden Ansprüche, **dadurch gekennzeichnet, daß** das Ablassen der aus der Kabinenluft entfernten mindestens einen Komponente und der Abluft über Bord kontinuierlich oder diskontinuierlich oder aus einer Kombination beider Möglichkeiten erfolgt.

6. Verfahren nach einem der vorangehenden Ansprüche, **dadurch gekennzeichnet, daß** eine der aus der Kabinenluft zu entfernenden Komponente Wasserdampf ist, wobei in dem Umluftkreis des Regenerationsstroms zur Steigerung der Entfeuchtungsleistung eine Kondensation des Wasserdampfs durchgeführt wird.

7. Verfahren nach Anspruch 6, **dadurch gekennzeichnet, daß** die Kondensation des Wasserdampfs mit einem Wärmerückgewinnungssystem (WRG) kombiniert wird.

8. Verfahren nach einem der vorangehenden Ansprüche, **dadurch gekennzeichnet, daß** der Regenerationsstroms in dem Umluftkreis mit ein Ventilator (**DV**) umgewälzt wird.

9. Verfahren nach einem der vorangehenden Ansprüche, **dadurch gekennzeichnet, daß** das Ablassen der aus der Kabinenluft entfernten mindestens einen Komponente und der Abluft über Bord sowohl am Boden als auch in Reiseflughöhe durchgeführt wird.

10. Verfahren nach einem der vorangehenden Ansprüche, **dadurch ge** **kennzeichnet,** daß es in Kombination mit einem Kabinenumluftverfahren verwendet wird, wobei nur ein Teil der zu reinigenden Kabinenumluft dem Adsorbens zugeführt wird.

11. Vorrichtung (**K**) zur Entfernung von mindestens einer spezifizierten gasförmigen Komponente aus der Kabinenluft eines Flugzeugs, mit einer Adsorptions/Desorptionseinheit **(A/D),** welche folgende folgenden Merkmale umfaßt:
- ein regenerierbares Adsorbens zum Adsorbieren der mindestens einen spezifizierten gasförmigen Komponente;
- einen Einlaß **(A1)** zur Zuführung der zu reinigenden Kabinenluft zu dem Adsorbens;
- einen Auslaß (**A2**) zum Zurückführen der gereinigten Kabinenluft in die Kabine nach der Adsorption;
- einen Einlaß (**D1**) zur Zuführung eines Regenerationsstroms an das Adsorbens;
- einen Auslaß (**D2)** zur Ableitung des Regenerationsstrom nach Desorption des Absorbens;
**dadurch gekennzeichnet, daß**
- Einlaß (**D1**) und Auslaß (**D2**) zur Zuführung bzw. Ableitung des Regenerationsstroms derart miteinander in Verbindung stehen, daß der Regenerationsstrom in einem Umluftkreis geführt wird, in welchen eine Aufkonzentration der mindestens einen spezifizierten gasförmigen Komponente erfolgt;
- ein Einlaß **(IF4)** zur Zuführung von Kabinenluft in den Umluftkreis des Regenerationsstroms vorhanden ist, wobei im Umluftkreis des Regenerationsstroms Kabinendruckniveau herrscht;
- eine Vorrichtung (**H**) zur Erwärmung des Regenerationsstroms vorhanden ist;
- Ventile (**V12, V13**) vorhanden sind, über die die mindestens eine spezifizierte gasförmigen Komponente und die Abluft aus dem Umluftkreis über Bord abgelassen werden;
- Ventile (**V14**) vorhanden sind, mittels denen die über Bord abgelassene Abluft durch Kabinenluft ersetzt wird.

12. Vorrichtung nach Anspruch 11, **dadurch gekennzeichnet, daß** das Adsorbens derart gewählt ist, daß an ihm gleichzeitig CO₂ und Wasserdampf gebunden werden können.

13. Vorrichtung nach einem der vorangehenden Ansprüche 11 oder 12, **dadurch gekennzeichnet, daß** das Absorbens ein Festamin ist.

14. Vorrichtüng nach einem der vorangehenden Ansprüche 11 bis 13, **dadurch gekennzeichnet, daß** in dem Umluftkreis des Regenerationsstroms eine Vorrichtung **(CHX)** zur Kondensation des Wasserdampfs vorhanden ist.

15. Vorrichtung nach Anspruch 14, **dadurch gekennzeichnet, daß** die Vorrichtung (**CHX**) zur Kondensation des Wasserdampfs mit einem Wärmerückgewinnungssystem (**WRG**) kombiniert ist.

16. Vorrichtung nach einem der vorangehenden Ansprüche 11 bis 15, **dadurch gekennzeichnet, daß** in dem Umluftkreis des Regenerationsstroms ein Ventilator (**D V)** vorhanden ist.

17. Vorrichtung nach einem der vorangehenden Ansprüche 11 bis 16, **dadurch gekennzeichnet, daß** die Adsorptions/Desorptionseinheit **(A/D)** folgende Merkmale aufweist:
sie umfaßt eine oder mehrere Kammern (**20** bis **23**), die jeweils ein Adsorbens enthalten,
die Kammern (**20**) weisen jeweils einen Einlaß und einen Auslaß für die Kabinenluft sowie einen Einlaß und einen Auslaß für den Regenerationsstrom auf;
an den genannten Einlässen und Auslässen ist jeweils ein Ventil (**30** bis **33**) angeordnet zur Steuerung des Flusses von Kabinenluft und Regenerationsstrom durch die jeweilige Kammer (**20** bis **23**).

18. Vorrichtung nach einem der vorangehenden Ansprüche 11 bis 16, **dadurch gekennzeichnet, daß** die Adsorptions/Desorptionseinheit **(A/D)** folgende Merkmale aufweist:
einen Strömungskanal (**95, 96**) für die Kabinenluft, in dem mehrere Kammern (**60** bis **67**), die jeweils ein Adsorbens (**70** bis **77**) enthalten, angeordnet sind,
eine bewegliche Anschlußleitung (**80**) zur Zuführung des Regenerationsstroms in eine oder gleichzeitig in mehrere (**60, 67**) der genannten Kammern (**60** bis **67**) und eine weitere bewegliche Anschlußleitung (**81**) zur Ableitung des Regenerationsstroms aus dieser bzw. diesen Kammern (**60,67**),
so daß die Kammern **(61** bis **66),** welche bei gegebener Position der beiden beweglichen Anschlußleitungen (**80, 81**) nicht von dem Regenerationsstrom durchflossen werden, von der in dem Strömungskanal (95,96) geleiteten Kabinenluft durchflossen werden.

19. Vorrichtung nach Anspruch 18, **dadurch gekennzeichnet, daß** die Kammern (**60** bis **67**) rotationssymmetrisch um eine Achse (**98)** angeordnet sind, und die beiden Anschlußleitungen (**80, 81**) um diese Achse (**98**) beweglich sind.

## Claims

1. Method for the removal of at least one specified gaseous component from the cabin air of an aircraft, having the following method steps:
- feeding the cabin air to be purified to a regenerateable adsorbent and adsorption of the at least one specified gaseous component;
- recirculating the purified cabin air into the cabin after adsorption;
- regeneration of the absorbent by means of a regeneration stream;
**characterized in that** the regeneration stream used is heated cabin air at cabin-pressure level which is carried in a circulating-air circuit, upgrading of the at least one specified gaseous component taking place in the circulating-air circuit, and the upgraded at least one specified gaseous component and the waste air from the circulating-air circuit being discharged overboard, the waste air left overboard being replaced by cabin air.

2. Method according to Claim 1, **characterized in that** the component to be removed from the cabin air is CO₂ or water vapour.

3. Method according to Claim 2, **characterized in that** CO₂ and water vapour are adsorbed simultaneously on the adsorbent.

4. Method according to one of the preceding claims, **characterized in that** the adsorbent used is a solid amine.

5. Method according to one of the preceding claims, **characterized in that** the discharge of the at least one component removed from the cabin air and of the waste air overboard takes place continuously or discontinuously or by a combination of both possibilities.

6. Method according to one of the preceding claims, **characterized in that** one of the components to be removed from the cabin air is water vapour, condensation of the water vapour being carried out in the circulating-air circuit of the regeneration stream in order to increase the dehumidifying capacity.

7. Method according to Claim 6, **characterized in that** the condensation of the water vapour is combined with a heat recovery system (WRG).

8. Method according to one of the preceding claims, **characterized in that** the regeneration stream is circulated in the circulating-air circuit by means of a fan (DV).

9. Method according to one of the preceding claims, **characterized in that** the discharge of the at least one component removed from the cabin air and of the waste air overboard is carried out both on the ground and at cruising altitude.

10. Method according to one of the preceding claims, **characterized in that** it is used in combination with a cabin-circulating air method, only part of the cabin-circulating air to be purified being fed to the adsorbent.

11. Device (K) for the removal of at least one specified gaseous component from the cabin air of an aircraft, having an adsorption/desorption unit (A/D) which comprises the following features:
- a regenerateable adsorbent for the adsorption of the at least one specified gaseous component;
- an inlet (A1) for feeding the cabin air to be purified to the adsorbent;
- an outlet (A2) for recirculating the purified cabin air into the cabin after adsorption;
- an inlet (D1) for feeding a regeneration stream to the adsorbent;
- an outlet (D2) for drawing off the regeneration stream after the desorption of the adsorbent;
**characterized in that**
- the inlet (D1) and outlet (D2) for respectively feeding and drawing off the regeneration stream are connected to one another in such a way that the regeneration stream is carried in a circulating-air circuit, in which an upgrading of the at least one specified gaseous component takes place;
- there is an inlet (IF4) for feeding cabin air into the circulating-air circuit of the regeneration stream, cabin-pressure level prevailing in the circulating-air circuit of the regeneration stream;
- there is a device (H) for heating the regeneration stream;
- there are valves (V12, V13), via which the at least one specified gaseous component and the waste air from the circulating-air circuit are discharged overboard;
- there are valves (V14) by means of which the waste air discharged overboard is replaced by cabin air.

12. Device according to Claim 11, **characterized in that** the adsorbent is selected such that CO₂ and water vapour can be bound simultaneously to it.

13. Device according to one of the preceding Claims 11 and 12, **characterized in that** the adsorbent is a solid amine.

14. Device according to one of the preceding Claims 11 to 13, **characterized in that**, in the circulating-air circuit of the regeneration stream, there is a device (CHX) for condensing the water vapour.

15. Device according to Claim 14, **characterized in that** the device (CHX) for condensing the water vapour is combined with a heat recovery system (WRG).

16. Device according to one of the preceding Claims 11 to 15, **characterized in that** there is a fan (DV) in the circulating-air circuit of the regeneration stream.

17. Device according to one of the preceding Claims 11 to 16, **characterized in that** the adsorption/desorption unit (A/D) has the following features:
it comprises one or more chambers (20 to 23) which each contain an adsorbent,
the chambers (20) each have an inlet and an outlet for the cabin air and an inlet and an outlet for the regeneration stream;
a valve (30 to 33) is arranged in each case at said inlets and outlets for controlling the flow of cabin air and regeneration stream through the respective chamber (20 to 23).

18. Device according to one of the preceding Claims 11 to 16, **characterized in that** the adsorption/desorption unit (A/D) has the following features:
a flow duct (95, 96) for the cabin air, in which are arranged a plurality of chambers (60 to 67) which each contain an adsorbent (70 to 77),
a moveable connecting line (80) for feeding the regeneration stream into one or simultaneously into a plurality (60, 67) of said chambers (60 to 67) and an additional moveable connecting line (81) for drawing off the regeneration stream from this or these chambers (60, 67),
so that the chambers (61 to 66), which, in a given position of the two moveable connecting lines (80, 81), do not have the regeneration stream flowing through them, have flowing through them the cabin air carried in the flow duct (95, 96).

19. Device according to Claim 18, **characterized in that** the chambers (60 to 67) are arranged rotationally symmetrically about an axis (98), and the two connecting lines (80, 81) are moveable about this axis (98).

## Revendications

1. Procédé d'élimination d'au moins un composant gazeux spécifié de l'air de cabine d'un avion, comprenant les étapes de procédé suivantes :
- apport de l'air de cabine à purifier à un adsorbant à régénération et adsorption de l'au moins un composant gazeux spécifié ;
- renvoi de l'air de cabine purifié dans la cabine après l'adsorption ;
- régénération de l'adsorbant au moyen d'un courant de régénération ;
**caractérisé en ce que** l'on utilise en tant que courant de régénération de l'air de cabine chauffé au niveau de la pression de la cabine, lequel est guidé dans un circuit d'air de recirculation, une concentration de l'au moins un composant gazeux spécifié s'effectuant dans le circuit d'air de recirculation et l'au moins un composant concentré gazeux spécifié et l'air d'évacuation du circuit d'air de recirculation étant rejetés à l'extérieur, l'air d'évacuation rejeté à l'extérieur étant remplacé par l'air de cabine.

2. Procédé selon la revendication 1, **caractérisé en ce que** le composant à éliminer de l'air de cabine est du CO₂ ou de la vapeur d'eau.

3. Procédé selon la revendication 2, **caractérisé en ce que** du CO₂ et de la vapeur d'eau sont simultanément adsorbés sur l'adsorbant.

4. Procédé selon l'une quelconque des revendications précédentes, **caractérisé en ce que** l'on utilise en tant qu'adsorbant une amine solide.

5. Procédé selon l'une quelconque des revendications précédentes, **caractérisé en ce que** le rejet à l'extérieur de l'au moins un composant et de l'air d'évacuation éliminés de l'air de cabine s'effectue en continu ou de façon discontinue ou suivant une combinaison des deux possibilités.

6. Procédé selon l'une quelconque des revendications précédentes, **caractérisé en ce qu**'un composant à éliminer de l'air de cabine est la vapeur d'eau, une condensation de la vapeur d'eau ayant lieu dans le circuit d'air de recirculation du courant de régénération pour augmenter la puissance de déshumidification.

7. Procédé selon la revendication 6, **caractérisé en ce que** la condensation de la vapeur d'eau est combinée à un système de récupération de chaleur (**WRG**).

8. Procédé selon l'une quelconque des revendications précédentes, **caractérisé en ce que** l'on fait circuler le courant de régénération dans le circuit d'air de recirculation avec un ventilateur (**DV**).

9. Procédé selon l'une quelconque des revendications précédentes, **caractérisé en ce que** le rejet à l'extérieur de l'au moins un composant et de l'air d'évacuation éliminés de l'air de cabine s'effectue à la fois au sol et à l'altitude de croisière.

10. Procédé selon l'une quelconque des revendications précédentes, **caractérisé en ce qu'**il est utilisé conjointement avec un procédé de recirculation d'air de cabine, où seulement une partie de l'air de recirculation de cabine à purifier est amenée à l'adsorbant.

11. Dispositif (**K**) d'élimination d'au moins un composant gazeux spécifié de l'air de cabine d'un avion, comprenant une unité d'adsorption/désorption (**A/D**) qui présente les caractéristiques suivantes :
- un adsorbant à régénération pour l'adsorption de l'a moins un composant gazeux spécifié ;
- une entrée (**A1**) pour l'apport de l'air de cabine à purifier à l'adsorbant
- une sortie (**A2**) pour le retour de l'air de cabine purifié dans la cabine après l'adsorption ;
- une entrée (**D1**) pour l'apport d'un courant de régénération à l'adsorbant ;
- une sortie (**D2**) pour l'évacuation du courant de régénération après désorption de l'adsorbant
**caractérisé en ce que**
- l'entrée (**D1**) et la sortie (**D2**) pour l'apport, respectivement l'évacuation du courant de régénération sont connectées de telle sorte que le courant de régénération soit guidé dans un circuit d'air de recirculation dans lequel s'effectue une concentration de l'au moins un composant gazeux spécifié ;
- il est prévu une entrée (**IF4**) pour l'apport d'air de cabine dans le circuit d'air de recirculation du courant de régénération, le niveau de pression de cabine régnant dans le circuit d'air de recirculation du courant de régénération ;
- il est prévu un dispositif (**H**) pour chauffer le courant de régénération ;
- des soupapes (**V12, V13**) sont prévues, par l'intermédiaire desquelles l'au moins un composant gazeux spécifié et l'air d'évacuation sont rejetés à l'extérieur depuis le circuit d'air de recirculation ;
- il est prévu des soupapes (**V14**) au moyen desquelles l'air d'évacuation rejeté à l'extérieur est remplacé par l'air de cabine.

12. Dispositif selon la revendication 11, **caractérisé en ce que** l'adsorbant est choisi de telle sorte que du CO₂ et de la vapeur d'eau puissent se lier à lui simultanément.

13. Dispositif selon l'une quelconque des revendications précédentes 11 ou 12, **caractérisé en ce que** l'adsorbant est une amine solide.

14. Dispositif selon l'une quelconque des revendications précédentes 11 à 13, **caractérisé en ce qu'**un dispositif (**CHX**) pour la concentration de la vapeur d'eau est prévu dans le circuit d'air de recirculation du courant de régénération.

15. Dispositif selon la revendication 14, **caractérisé en ce que** le dispositif **(CHX)** pour la condensation de la vapeur d'eau est combiné à un système de récupération de chaleur (**WRG**).

16. Dispositif selon l'une quelconque des revendications précédentes 11 à 15, **caractérisé en ce qu**'il est prévu un ventilateur (**DV**) dans le circuit d'air de recirculation du courant de régénération.

17. Dispositif selon l'une quelconque des revendications précédentes 11 à 16, **caractérisé en ce que** l'unité d'adsorption/désorption (**A/D**) présente les caractéristiques suivantes :
elle comprend une ou plusieurs chambres (**20** à **23**), qui contiennent chacune un adsorbant,
les chambres (**20**) présentent chacune une entrée et une sortie pour l'air de cabine ainsi qu'une entrée et une sortie pour le courant de régénération ;
une soupape (**30** à **33**) est disposée à chaque fois au niveau desdites entrées et sorties, pour la commande du flux d'air de cabine et du courant de régénération traversant la chambre respective (**20** à **23**).

18. Dispositif selon l'une quelconque des revendications précédentes 11 à 16, **caractérisé en ce que** l'unité d'adsorption/désorption **(A/D)** présente les caractéristiques suivantes :
un canal d'écoulement (**95, 96**) pour l'air de cabine, dans lequel sont disposées plusieurs chambres (**60** à **67**), qui contiennent chacune un adsorbant (**70** à **77**),
une conduite de raccordement mobile (**80**) pour l'apport du courant de régénération dans une ou simultanément dans plusieurs (**60**, **67)** desdites chambres (**60** à **67**) et une autre conduite de raccordement mobile (**81**) pour le rejet du courant de régénération hors de cette ou de ces chambre(s) (**60, 67**),
de sorte que les chambres (**61** à **66),** qui, dans la position donnée des deux conduites de raccordement mobiles (**80, 81**), ne sont pas parcourues par le courant de régénération, soient parcourues par l'air de cabine guidé dans le canal d'écoulement (**95, 96**).

19. Dispositif selon la revendication 18, **caractérisé en ce que** les chambres (**60** à **67**) sont disposées avec une symétrie de révolution autour d'un axe (**98**), et les deux conduites de raccordement (**80, 81**) sont mobiles autour de cet axe (**98**).
